# DEMANDE DE BREVET EUROPEEN

(11) **EP 1 216 640 A1**
(43) Date de publication de la demande: **26.06.2002**
(21) Numéro de dépôt: 00127597.3
(22) Date de dépôt: 15.12.2000
(51) Int. Cl.: A47G 21/04, A23L 1/40

(54) **Ustensile pour soupe**

(71) Demandeur: SOCIETE DES PRODUITS NESTLE S.A., 1800 Vevey (CH)
(72) Inventeur: Dupart, Pierre, 8053 Zuerich/Witikon (CH); Buesing, Bernd, 8310 Grafstal (CH); Hertlein, Jochen, 8405 Winterthur (CH); Schatz, Hans, 8157 Dielsdorf (CH)
(74) Mandataire: Wavre, Claude-Alain

(57) **Abrégé**

Assemblage destiné à la reconstitution rapide de soupes comprenant un aide culinaire solide solidaire d'un ustensile de préhension.

Procédé de fabrication d'un tel assemblage.

## Description

La présente invention concerne un assemblage destiné à la reconstitution rapide de soupes, bouillons ou autres boissons chaudes.
Divers extraits de viandes et/ou de légumes, soupes en poudres ou bouillons-cubes existent pour la reconstitution de boissons de type consommés, soupes, bouillons ou potages, par immersion et homogénéisation dans un liquide bouillant ou chaud.
De tels produits se présentent traditionnellement sous forme pulvérulente, pâteuse, liquide concentré et sont ainsi additionnés extemporanément au liquide chaud, ceci dans un récipient, puis dissout ou homogénéisé à l'aide d'un ustensile tel une cuillère ou un fouet, par exemple.
Ce type de produit plus ou moins concentré apporte une certaine commodité au consommateur et ceci particulièrement lors de la restauration hors foyer. Cependant, dans de telles circonstances, hors du domicile, autant le transport du produit est aisé, autant son utilisation est compliquée. Il est nécessaire de portionner le produit ou de le sortir de son emballage, de disposer de ce dernier, de mélanger le produit à l'eau chaude dans un récipient et enfin de remuer l'ensemble pour assurer une bonne homogénéisation. Toutes ces opérations sont simples à domicile mais elles deviennent contraignantes et complexes en d'autres circonstances tel que sur le lieu de travail ou sur bord de table, par exemple.

GB 1019552 décrit un système d'emballage en forme de cuillère dans lequel un produit concentré est disposé dans la cavité de la cuillère et est recouvert et maintenu à l'aide d'un opercule thermo-sensible. Lors du contact avec l'eau chaude, l'opercule plastique se détache partiellement ou totalement pour libérer le produit concentré soluble. Un tel système n'est pas idéal car un lambeau de plastique reste solidaire de la cuillère ou subsiste dans la boisson, ce qui gène considérablement l'utilisation de la cuillère ou la consommation de la boisson ainsi reconstituée.

US 3946652 décrit une cuillère cloisonnée et perforée de plusieurs petits trous contenant dans la cloison un ingrédient soluble, principalement pulvérulent. La réalisation d'un tel ustensile est complexe et ne s'envisage que pour des ingrédients pulvérulents.

La présente invention se propose donc de fournir un assemblage destiné à la reconstitution rapide de soupes ou bouillons de fabrication et d'usage simple.

A cet effet, la présente invention concerne un assemblage comprenant un ustensile de préhension ou de remuage solidaire d'une masse d'aide culinaire composé de 25 à 40% de matière grasse solide à température ambiante, de 20 à 70% d'agents aromatisants et de 5 à 50% d'agents liants.

Par « ustensile de préhension ou de remuage » on entend dans la présente description, un objet en un matériau solide, de préférence non hydrosoluble tel que le bois, le plastique ou le métal, par exemple, de forme longitudinale ayant au moins deux extrémités, dont une permettant la préhension et/ou le remuage manuel. Il peut ainsi s'agir d'une cuillère, d'une fourchette, d'un bâtonnet ou d'un fouet, par exemple.
Par l'expression « solidaire », on entend que l'ustensile de préhension ou de remuage et la masse d'aide culinaire sont réunis et/ou assemblés l'un dans l'autre ou l'un sur l'autre de manière à constituer un ensemble cohésif. Ainsi, l'ustensile peut être emprisonné partiellement dans la masse d'aide culinaire, par exemple. Si l'ustensile présente une cavité, celle-ci est remplie par la masse d'aide culinaire. Il peut s'agir ainsi de la partie creuse d'une cuillère, par exemple.
Dans une forme particulière de réalisation, l'ustensile de préhension comprend un manche creux contenant une garniture pour soupe du type légumes déshydratés, croûtons, flocons de céréales ou céréales expansés, par exemple. L'extrémité opposée au réceptacle de la cuillère peut être fermée à l'aide d'un opercule en plastique, par exemple. Après reconstitution de la soupe, l'opercule peut être ôté et la garniture versée dans la soupe, ce qui permet de lui conserver sa croustillance au moment de la consommation.
Par « masse d'aide culinaire », on entend une quantité de forme définie ou indéfinie d'aide culinaire solide à température ambiante. Cette quantité peut correspondre généralement à la dose nécessaire à la reconstitution d'une portion individuelle de soupe ou de bouillon. Cette masse d'aide culinaire peut ainsi avoir une forme particulière identifiable ou non.
En effet l'aide culinaire selon la présente invention comprend de 25 à 40% de matière grasse solide à température ambiante, de 20 à 70% d'agents aromatisants et de 5 à 50% d'agents liants et présente ainsi la particularité d'être moulable et d'épouser, après refroidissement et solidification, les reliefs du récipient dans lequel il est coulé. Cet aide culinaire est fluide, s'écoule facilement lorsqu'il est chauffé à une température supérieure à 45°C, ce qui permet de réaliser ainsi facilement le moulage. A une telle température, l'aide culinaire présente une viscosité de l'ordre de celle du chocolat fondu aux environs de 40°C. La matière grasse entrant dans la composition de l'aide culinaire de l'assemblage selon l'invention est une matière grasse solide à température ambiante telle que des graisses végétales ou animales plus ou moins hydrogénées, utilisées seules ou en mélange. Il peut ainsi s'agir, par exemple, d'huile de palme ou de palmiste hydrogénée.

Les agents liants compris dans la masse d'aide culinaire peuvent être choisis dans le groupe comprenant les amidons, les amidons modifiés chimiquement et/ou physiquement, les dextrines, les malto-dextrines, les sirops de glucose de DE variable, les gommes, les farines, les solides non gras du lait, utilisés seuls ou en mélange, par exemple. L'aide culinaire selon l'invention peut aussi comprendre des émulsifiants utilisés seuls ou en mélange. Il peut s'agir de lécithine de soja, de mono et/ou de diglycérides, par exemple.
Les agents aromatisants compris dans la masse d'aide culinaire peuvent être choisis dans le groupe comprenant sel, sucres, épices, glutamate mono-sodique, poudres, arômes ou extraits de légumes, viande, ou fromage, utilisés seuls ou en mélange, par exemple. Les épices peuvent être du poivre, du paprika, du curry, de l'ail, de l'oignon, par exemple. Des colorants pourront aussi être compris dans l'aide culinaire, soit sous forme d'épices telles que du curry ou du paprika ou sous la forme plus classique de colorants alimentaires, par exemple.
Les agents liants ainsi que les agents aromatisants compris dans la masse d'aide culinaire peuvent se présenter sous forme pulvérulente et la taille moyenne des particules peut être comprise entre 10 et 500 µm, de préférence entre 20 et 200 µm et de manière plus préférentielle encore entre 50 et 100 µm. La taille moyenne réduite des particules d'agents liants et aromatisants comprises dans la masse d'aide culinaire à l'obtention d'un mélange pouvant être facilement moulé, si désiré.
Cependant la masse d'aide culinaire peut aussi comprendre des éléments visuels dont la taille est supérieure à la taille des particules d'agents aromatisants et d'agents liants. Par éléments visuels on entendra des particules aisément identifiables à l'oeil nu. De tels éléments peuvent être des croûtons, des morceaux de légumes, de viande ou de crustacés, des céréales sous forme de flocons ou de particules extrudées plus ou moins expansées, par exemple.

L'invention concerne aussi un procédé de fabrication du présent assemblage comprenant les étapes suivantes :
- chauffage de 25 à 40 parts de matière grasse jusqu'à fusion,
- ajout de 5 à 50 parts d'agents liants et de 20 à 70 parts d'agents aromatisants,
- homogénéisation de manière à obtenir un mélange versable,
- coulage dans une cavité d'un ustensile de préhension ou de remuage et
- refroidissement de l'ensemble jusqu'à solidification du mélange.

Si l'ustensile de l'assemblage ne comprend pas de cavité le procédé de fabrication de cet assemblage comprend les étapes suivantes :
- chauffage de 25 à 40 parts de matière grasse jusqu'à fusion,
- ajout de 5 à 50 parts d'agents liants et de 20 à 70 parts d'agents aromatisants,
- homogénéisation de manière à obtenir un mélange versable,
- coulage du mélange dans un moule,
- introduction partielle d'un ustensile de préhension ou de remuage dans le mélange avant solidification,
- refroidissement jusqu'à solidification du mélange et
- démoulage de l'assemblage.

Le moule utilisé peut être un moule avec ou sans reliefs. On obtient ainsi un assemblage comprenant un moyen de préhension et/ou de remuage ainsi qu'une masse d'aide culinaire adéquat pour la reconstitution rapide de soupes ou bouillon par remuage direct dans un liquide chaud ou bouillant. Le consommateur peut aisément agiter ledit assemblage dans une tasse d'eau bouillante pour obtenir très rapidement un bouillon ou un potage, par exemple, ceci grâce à la fonte et à la dissolution rapides des composants de l'aide culinaire de l'assemblage selon l'invention.

Finalement, la présente invention concerne aussi une méthode de reconstitution rapide d'un bouillon par agitation d'un assemblage comprenant un ustensile de préhension ou de remuage solidaire d'une masse d'aide culinaire composé de 25 à 40% de matière grasse solide à température ambiante, de 20 à 70% d'agents aromatisants et de 5 à 50% d'agents liants, dans un liquide chaud.

### EXEMPLE 1 Cuillère-soupe

Les ingrédients pulvérulents suivants sont mélangés dans un mixer HOBART :

| | |
|---|---|
| Sel fin | 50 g |
| Glutamate | 20 g |
| Sucre | 60 g |
| Poudre de tomate | 200 g |
| Amidon de pomme de terre | 100 g |
| Farine de blé | 200 g |
| Poudre d'oignon | 10 g |
| Poudre d'ail | 5 g |

Les ingrédients pulvérulents du mélange précédent présentent une granulométrie moyenne de 120 µm.
La matière grasse (330 g, huile de palme hydrogénée) est fondue à une température de l'ordre de 50°C.
Le mélange pulvérulent est ajouté à la matière grasse et le tout est mélangé et homogénéisé à une température de 50°C dans un mélangeur thermostaté.
Le mélange est ensuite coulé dans la partie creuse d'une cuillère à soupe en plastique puis refroidi par passage dans une armoire réfrigérée à 4°C.
Il suffit ainsi d'agiter la cuillère dans une tasse contenant 200 ml d'eau bouillante pour assurer rapidement la fonte de l'aide culinaire et obtenir ainsi une délicieuse soupe.
Cette cuillère peut être emballée sous un film plastique et être transportée aisément dans un sac pour être utilisée selon les désirs du consommateur, sans manipulations complexes.

### EXEMPLE 2 Cuillère-soupe avec manche creux renfermant des croutons.

L'assemblage est identique à celui décrit dans l'exemple 1 à la différence que le manche de la cuillère est creux, de section carrée de 1 cm d'arête et renferme 2 g de croûtons de 0,5 cm d'arête et 2 g de flocons de carotte. L'extrémité opposée au réceptacle de la cuillère est fermée à l'aide d'un opercule en plastique. Après la fonte de l'aide culinaire et l'obtention de la soupe, l'opercule est ôté et la garniture versée dans la soupe, ce qui permet de lui conserver sa croustillance au moment de la consommation.

### EXEMPLE 3 Batônnet-soupe

Les ingrédients constitutifs du mélange et le procédé de fabrication du mélange sont identiques à ceux décrits à l'exemple 1. Dans ce cas le mélange thermostaté à 50°C est versé dans des moules parallélépipédiques de 4x2x1 cm. Avant refroidissement et solidification, un bâtonnet en bois de type bâtonnet pour crème glacée est introduit à moitié dans le mélange encore mou. L'assemblage est ensuite refroidi comme indiqué à l'exemple 1 et le tout est démoulé par application de vibrations. Il suffit ainsi d'agiter le bâtonnet-soupe dans une tasse contenant 200 ml d'eau bouillante pour assurer rapidement la fonte de l'aide culinaire et obtenir ainsi une délicieuse soupe.

## Revendications

1. Assemblage comprenant un ustensile de préhension ou de remuage solidaire d'une masse d'aide culinaire composé de 25 à 40% de matière grasse solide à température ambiante, de 20 à 70% d'agents aromatisants et de 5 à 50% d'agents liants.

2. Assemblage selon la revendication 1, **caractérisé en ce que** l'ustensile de préhension ou de remuage est une cuillère, une fourchette, un bâtonnet ou un fouet.

3. Assemblage selon les revendications 1 et 2, **caractérisé en ce que**, l'ustensile est emprisonné partiellement dans la masse d'aide culinaire.

4. Assemblage selon les revendications 1 et 2, **caractérisé en ce que**, l'ustensile présente une cavité remplie par la masse d'aide culinaire.

5. Assemblage selon les revendications 1 à 4, **caractérisé en ce que**, l'ustensile de préhension comprend un manche creux contenant une garniture pour soupe

6. Procédé de fabrication d'un assemblage selon les revendications 1, 2 et 4 et 5 comprenant les étapes suivantes :
- chauffage de 25 à 40 parts de matière grasse jusqu'à fusion,
- ajout de 5 à 50 parts d'agents liants et de 20 à 70 parts d'agents aromatisants.
- homogénéisation de manière à obtenir un mélange versable
- coulage dans une cavité d'un ustensile de préhension ou de remuage,
- refroidissement de l'ensemble jusqu'à solidification du mélange.

7. Procédé de fabrication d'un assemblage selon les revendications 1, 2, 3 et 5 comprenant les étapes suivantes :
- chauffage de 25 à 40 parts de matière grasse jusqu'à fusion,
- ajout de 5 à 50 parts d'agents liants et de 20 à 70 parts d'agents aromatisants.
- homogénéisation de manière à obtenir un mélange versable,
- coulage du mélange dans un moule
- introduction partielle d'un ustensile de préhension ou de remuage dans le mélange avant solidification,
- refroidissement jusqu'à solidification du mélange,
- démoulage de l'assemblage.

8. Méthode de reconstitution rapide d'un bouillon par agitation d'un assemblage selon l'une des revendications 1 à 5.
